# EUROPÄISCHE PATENTSCHRIFT

(11) **EP 2 045 547 B1**
(45) Veröffentlichungstag und Bekanntmachung des Hinweises auf die Patenterteilung: **25.07.2012**
(21) Anmeldenummer: 08017254.7
(22) Anmeldetag: 01.10.2008
(51) Int. Cl.: F25B 17/08

(54) **Vakuum-Sorptionsvorrichtung**
Vacuum-sorption device
Installation de sorption à vide

(30) Priorität: 03.10.2007 DE 102007047454
(43) Veröffentlichungstag der Anmeldung: 08.04.2009
(73) Patentinhaber: Viessmann Werke GmbH & Co. KG, 35107 Allendorf (DE)
(72) Erfinder: Dawoud, Belal, Dr., 35066 Frankenberg (DE); Bornmann, Andreas, 35099 Burgwald (DE)
(74) Vertreter: Wolf, Michael

(56) Entgegenhaltungen:
- EP-A- 1 645 819
- DE-A1- 3 625 247
- DE-A1- 10 238 510
- DE-A1-102004 049 408
- GB-A- 241 291
- GB-A- 252 188

## Beschreibung

Die Erfindung betrifft eine Vakuum-Sorptionsvorrichtung gemäß dem Oberbegriff des Patentanspruchs 1.

Eine Vakuum-Sorptionsvorrichtung der eingangs genannten Art ist nach der DE 10 2004 049 408 B4 bekannt. Diese besteht aus einem ersten Volumenbereich, in dem ein periodisch ein Kältemittel (ad-) sorbierender oder desorbierender Sorber und ein Kondensator angeordnet sind, und einem unterhalb (geodätisch tiefer gelegen) des ersten angeordneten zweiten Volumenbereich, in dem ein Verdampfer angeordnet ist, wobei eine tiefste Stelle des ersten Volumenbereichs eine mit einem Verschlusselement verschließbare, zum zweiten Volumenbereich führende Öffnung aufweist.

Bei dieser Lösung sind im Unterschied zur DE 36 25 247 A1 der Kondensator und der Verdampfer zur Wirkungsgradsteigerung in verschiedenen Volumenbereichen angeordnet. Zur Trennung der Volumenbereiche ist bei der DE 10 2004 049 408 B4 ein mit einem Schwimmerelement wirkverbundener Deckel vorgesehen, dessen Betätigung letztlich über eine Pumpe erfolgt, die das Schwimmerelement mittels des Kältemittels aufschwimmen lässt. Wird die Pumpe abgeschaltet, schließt sich der Deckel.

Nach der DE 102 38 510 A1 ist alternativ ein selbsttätig arbeitendes Ventil zwischen den beiden Volumenbereichen vorgesehen, das mittels eines von einem Gewicht verursachten Drehmoments die Verbindungsöffnung schließt und beim Überschreiten einer bestimmten Druckdifferenz zwischen Kondensator-(erster Volumenbereich) und Verdampferraum (zweiter Volumenbereich) öffnet. Die Öffnungsdruckdifferenz soll dadurch entstehen, dass das kondensierende Kältemittel sich im Kondensatorsumpf sammelt und eine Kraft auf die Klappe ausübt, die mit steigender Kondensatfüllhöhe mit dem Fortschritt der Desorption steigt. Dieser Lösungsvorschlag für die Rückschlagklappe nach der DE 102 38 510 A1 ist - wie ersichtlich - für eine feste Öffnungsdruckdifferenz konzipiert, berücksichtigt aber nicht, dass der Druckunterschied zwischen Kondensator und Verdampfer stark von der Außentemperatur und der Rücklauftemperatur abhängig ist. Es ist dementsprechend festzustellen, dass die Klappe bei Druckdifferenzen oberhalb der Auslegungsdruckdifferenz offen bleibt und der Kältemitteldampf an dem Kondensator vorbeiströmt und dann auf dem Verdampfer kondensiert. Bei Unterschreiten der Auslegungsdruckdifferenz (weniger Temperaturhub zwischen Kondensator und Verdampfer) wird die Klappe geschlossen bleiben, wodurch kein Wärmepumpeneffekt erzielt werden kann. Somit wird der Wirkungsgrad dieser Sorptionswärmepumpe höchstens 1 betragen (wenn jegliche Wärmeverluste auszuschließen sind).

Der Erfindung liegt die Aufgabe zugrunde, bei einer Vakuum-Sorptionsvorrichtung der eingangs genannten Art (und zwar bei einer solchen mit wahlweise ad- [festen] oder auch absorbierenden [flüssigen] Sorber) ein selbsttätig arbeitendes und von Umgebungsbedingungen unabhängiges Verschlusselement bereitzustellen.

Diese Aufgabe ist mit einer Vakuum-Sorptionsvorrichtung der eingangs genannten Art durch die im Kennzeichen des Patentanspruchs 1 aufgeführten Merkmale gelöst.

Nach der Erfindung ist also vorgesehen, dass das Verschlusselement als im ersten Volumenbereich frei beweglich gelagerte Kugel ausgebildet ist, die einen grösseren Durchmesser als die formangepaßt ausgebildete Öffnung aufweist.

Mit anderen Worten ausgedrückt, ist erfindungsgemäß ein als Kugel ausgebildetes Verschlusselement vorgesehen, dessen Position vom Druck in den Volumenbereichen abhängt. Dabei hat die Kugel schwerkraftbedingt die prinzipielle Neigung, zur tiefsten Stelle im ersten Volumenbereich zu rollen. Da aber gerade dort die Öffnung zum zweiten Volumenbereich angeordnet ist, verschließt die Kugel stets automatisch diese Öffnung, die entsprechend kugelformangepasst ausgebildet ist. - Nur dann, wenn im zweiten Volumenbereich ein größerer Druck als im ersten Volumenbereich herrscht, welcher Zustand nachfolgend noch genauer erläutert wird, führt die Druckdifferenz dazu, dass die Kugel aus ihrem Sitz gehoben wird und die Öffnung frei gibt (über dieser "schwebt").

Betrachtet man die periodische Funktionsweise der Vakuum-Sorptionsvorrichtung im Einzelnen, so funktioniert die erfindungsgemäße Kugel wie folgt:

Zum Beispiel durch Einschalten eines Gasbrenners und Übertragung der entstehenden Wärme auf einen zum Beispiel mit Zeolith beschichteten Wärmetauscher (sogenannter Sorber) beginnt die sogenannte Desorptionsphase. Das Kältemittel (wegen seiner Umweltfreundlichkeit bevorzugt Wasser) wird aus dem Sorber ausgetrieben (verdampft). Dadurch steigt zunächst der Druck im ersten Volumenbereich. Der Kältemitteldampf kommt dann mit dem vergleichsweise kühlen Kondensator in Kontakt und kondensiert an dessen Oberfläche. Das nunmehr verflüssigte Kältemittel strömt schwerkraftbedingt zur tiefsten Stelle des ersten Volumenbereichs und sammelt sich um die erfindungsgemäße, schwimmfähige Kugel. Da in diesem Moment der Druck im ersten Volumenbereich noch größer als im zweiten Volumenbereich ist, wird die Kugel fest in ihren Sitz gepresst und verhindert einen Druckausgleich zwischen den beiden Volumina. Außerdem ist dementsprechend sichergestellt, dass kein Kältemittel in den Verdampferraum ablaufen kann.

Sobald die Wärmezufuhr zum Sorber unterbrochen (zum Beispiel durch Ausschalten des Gasbrenners) und dessen Kühlung (zum Beispiel mit Hilfe des Heizkreises) eingeleitet wird, beginnt bei diesem (wieder) die Neigung, Kältemitteldampf zu sorbieren (es beginnt die sogenannte Sorptionsphase). Dadurch sinkt im Kondensatorraum (erster Volumenbereich) der Druck. Unterschreitet dieser Druck den Druck im Verdampferraum, wird die Kugel bei einer bestimmten (über das Gewicht der Kugel einstellbaren) Druckdifferenz aus ihrem Sitz gehoben, so dass Kältemittel in den Verdampferraum abfließen und dort am Verdampfer verdampfen kann. Da durch die Verdampfung der Druck im Verdampferraum hoch gehalten und gleichzeitig der Sorber gekühlt wird, so dass der Druck im Kondensatorraum klein bleibt, bleibt die Öffnung zum Kondensatorraum für den Dampf passierbar, so dass dieser vom Sorber sorbiert werden kann. Erst wenn die Kältemittelmenge, die vorher im Kondensator kondensiert wurde, verdampft ist, wird die Kugel wieder vollständig in die Öffnung rollen. Ein ganz dichter Sitz der Kugel in der Öffnung wird sich ferner spätestens dann einstellen, sobald dem Sorber wieder Wärme zugeführt wird, also mit Beginn der nächsten Desorptionsphase, da in diesem Moment im ersten Volumenbereich der Druck wieder deutlich ansteigt.

Wie Experimente gezeigt haben, arbeitet die erfindungsgemäße Lösung völlig wartungs- und verschleißfrei. Die im übrigen fertigungstechnisch leicht herstellbare Lösung gewährleistet ferner einen hohen Wirkungsgrad der Vakuum-Sorptionsvorrichtung, und zwar unabhängig von den jeweiligen Umgebungsbedingungen.

Andere vorteilhafte Weiterbildungen der erfindungsgemäßen Vakuum-Sorptionsvorrichtung ergeben sich aus den abhängigen Patentansprüchen.

Der Vollständigkeit halber wird noch auf die nachveröffentlichte WO 2007/147280 A2 hingewiesen. Bei dieser ist insbesondere der Kondensator nicht als den Sorber umschließender Mantelraum ausgebildet.

Die erfindungsgemäße Vakuum-Sorptionsvorrichtung einschließlich ihrer vorteilhaften Weiterbildungen gemäß der abhängigen Patentansprüche wird nachfolgend anhand der zeichnerischen Darstellung eines bevorzugten Ausführungsbeispiels näher erläutert.

Es zeigt schematisch im Schnitt
- Figur 1: die erfindungsgemäße Vakuum-Sorptionsvorrichtung in der Desorptionsphase; und
- Figur 2: die Vakuum-Sorptionsvorrichtung gemäß Figur 1 in der Sorptionsphase.

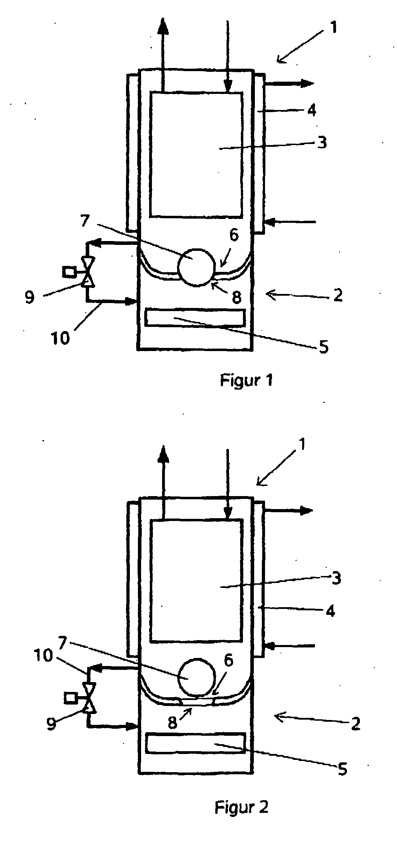

Die in den Figuren 1 und 2 dargestellte Vakuum-Sorptionsvorrichtung besteht in bekannter Weise aus einem ersten Volumenbereich 1, in dem ein periodisch ein Kältemittel (bevorzugt Wasser) ad- oder desorbierenden Sorber 3 (typischer Weise ein mit einem Zeolith beschichteter Wärmetauscher, der mit einem Brenner in Verbindung steht) und ein Kondensator 4 angeordnet sind. Der Kondensator 4 ist dabei im Sinne der DE 36 25 247 A1 als konzentrischer, den Sorber 3 umschließender Mantelraum ausgebildet. Ferner besteht die Vakuum-Sorptionvorrichtung aus einem unterhalb des ersten angeordneten zweiten Volumenbereich 2, in dem ein Verdampfer 5 angeordnet ist. Dabei weist eine tiefste Stelle 6 des ersten Volumenbereichs 1 eine mit einem Verschlusselement 7 verschließbare, zum zweiten Volumenbereich 2 führende Öffnung 8 auf, wobei ferner der erste Volumenbereich 1 um die tiefste Stelle 6 herum wie bei der DE 10 2004 049 408 B4 trichterförmig ausgebildet ist (wahlweise konus-, aber auch kalottenartig oder dergleichen).

Wesentlich für die erfindungsgemäße Vakuum-Sorptionsvorrichtung ist nun (und dies gilt nicht nur für die in den Figuren 1 und 2 dargestellte Ausführungsform), dass das Verschlusselement 7 als im ersten Volumenbereich 1 frei beweglich gelagerte Kugel ausgebildet ist, die einen grösseren Durchmesser als die formangepaßt ausgebildete Öffnung 8 aufweist. Dabei gewährleistet die genannte Größenmaßgabe, dass die Kugel nicht versehentlich in den zweiten Volumenbereich 2 gelangen kann.

Das als Kugel ausgebildete Verschlusselement 7 ist (völlig) frei beweglich im ersten Volumenbereich 1 gelagert, d. h. die Kugel kann frei im Volumenbereich 1 herumrollen und hat außer über ihre Auflagefläche keinerlei Kontakt zu anderen Bauteilen der Vakuum-Sorptionsvorrichtung.

Bezüglich der konstruktiven Gestaltung des Verschlusselements 7 hat es sich als besonders vorteilhaft erwiesen, die Kugel innen hohl (ballartig) und aus Kunststoff, insbesondere Polypropylen, auszubilden, da sich auf diese Weise das an der gewählten bzw. erforderlichen Öffnungsdruckdifferenz orientierte Gewicht der Kugel gut einstellen bzw. vordefinieren läßt.

Damit die Kugel einen dichten Abschluss mit der Öffnung 8 bildet, ist ferner vorteilhaft vorgesehen, dass die kreisrunde Öffnung 8 an ihrem zum ersten Volumenbereich 1 gerichteten Randbereich wahlweise konusförmig mit einem Öffnungswinkel von 20° bis 80°, bevorzugt 60°, oder kugelformangepasst ausgebildet ist. Diese Maßgabe gewährleistet, dass die Kugel gewissermaßen in die Öffnung 8 hineinrutscht und sich dort festsetzt. Erst bei einem gewissen Überdruck im Verdampferraum wird die Kugel dann wieder aus diesem passgenauen Sitz herausgehoben bzw. -gepresst.

Damit im Volumenbereich 1 bzw. Kondensatorraum am Ende der Desorptionsphase kein Kältemittel (Wasser) verbleibt, ist ferner vorgesehen, dass der erste Volumenbereich 1 mindestens um die tiefste Stelle 6 herum (vorzugsweise an allen Kältemittelkontaktbereichen - ausgenommen der Sorber 3 natürlich) eine hydrophobe Oberfläche bzw. Oberflächenbeschichtung aufweist.

Die beschriebene Lösung ist für ein Kältemittel oder eine Kältemittelmischung ohne jegliche Einschränkung einsetzbar, sofern diese einen Gefrierpunkt unter 0°C besitzt. Wird allerdings, wie oben erwähnt, Wasser als Kältemittel verwendet, so ist der Einsatzbereich für Umgebungstemperaturen unterhalb von +3°C eingeschränkt, da das Wasser beim Abkühlen im oberen Baurraum (Volumenbereich 1) einfrieren würde und dementsprechend nicht mehr in den Volumenbereich 2 (Verdampferraum) abfließen kann. Aus diesem Grund ist erfindungsgemäß weiterhin für Anwendungen bei niedrigen Außentemperaturen vorgesehen, dass die beiden Volumenbereiche 1, 2, wie in den Figuren 1 und 2 dargestellt, miteinander über eine mit einem Druckausgleichsventil 9 versehene Verbindungsleitung 10 verbunden sind. Dabei sind die Dampfräume miteinander verbunden, und zwar so, dass kein Kältemittel durch die Verbindungsleitung 10 abfließen kann. Während der Abkühlphase des Sorbers 3 wird das Druckausgleichsventil 9 (im Prinzip ein normales Ventil) bei einem Kondensatorraumdruck von etwa 25 mbar geöffnet (dieser Wert wird mit den Sorberein- und -austrittstemperaturen korreliert, so dass keine zusätzliche Druckmessung erforderlich ist). Dadurch wird der Druck in den beiden Volumenbereichen 1, 2 ausgeglichen (im Verdampferraum war beispielsweise ein Druck von etwa 4 mbar), wonach dann (Dauer etwa 3 bis 10 Sekunden) das Ventil wieder geschlossen wird (die Steuerung des Ventils erfolgt dabei wahlweise direkt über die Ablaufsteuerung der Sorptionsvorrichtung oder mit Hilfe eines Temperatursensors am Sorber über den letztlich der Druck im Kondensatorraum bestimmbar ist). Da in dieser Phase nur der Sorber durchströmt wird, ist seine Abkühlrate schneller als die des Verdampferraums und somit sinkt der Druck im Kondensatorraum schneller als im Verdampferraum. Diese Wirkung wird durch die große Sorptionsoberfläche des Sorptionsmittels noch verstärkt. Somit unterschreitet der Druck im Kondensatorraum den im Verdampferraum in dem Maße, dass die Kugel zu schweben beginnt und das Wasser (Kältemittel) in den Verdampferraum abfließen kann, bevor es auf dem trichterförmigen Trennboden einfriert. Dank des Druckausgleichsventils 9 kann somit auch absolut umweltfreundliches Wasser als Kältemittel verwendet werden.

## Patentansprüche

1. Vakuum-Sorptionsvorrichtung, umfassend einen ersten Volumenbereich (1), in dem ein periodisch ein Kältemittel sorbierender oder desorbierender Sorber (3) und ein Kondensator (4) angeordnet sind, wobei der Kondensator (4) als den Sorber (3) umschließender Mantelraum ausgebildet ist, und einen unterhalb des ersten angeordneten zweiten Volumenbereich (2), in dem ein Verdampfer (5) angeordnet ist, wobei eine tiefste Stelle (6) des ersten Volumenbereichs (1) eine mit einem Verschlusselement (7) verschließbare, zum zweiten Volumenbereich (2) führende Öffnung (8) aufweist,
**dadurch gekennzeichnet,**
**dass** das Verschlusselement (7) als im ersten Volumenbereich (1) frei beweglich gelagerte Kugel ausgebildet ist, die einen grösseren Durchmesser als die formangepaßt ausgebildete Öffnung (8) aufweist.

2. Vakuum-Sorptionsvorrichtung nach Anspruch 1, **dadurch gekennzeichnet,**
**dass** das als Kugel ausgebildete Verschlusselement (7) innen hohl ausgebildet ist.

3. Vakuum-Sorptionsvorrichtung nach Anspruch 1 oder 2,
**dadurch gekennzeichnet,**
**dass** das als Kugel ausgebildete Verschlusselement (7) aus Kunststoff, insbesondere Polypropylen, besteht.

4. Vakuum-Sorptionsvorrichtung nach einem der Ansprüche 1 bis 3,
**dadurch gekennzeichnet,**
**dass** die kreisrunde Öffnung (8) an ihrem zum ersten Volumenbereich (1) gerichteten Randbereich wahlweise konusförmig mit einem Öffnungswinkel von 20° bis 80°, bevorzugt 60°, oder kugelformangepasst ausgebildet ist.

5. Vakuum-Sorptionsvorrichtung nach einem der Ansprüche 1 bis 4,
**dadurch gekennzeichnet,**
**dass** der erste Volumenbereich (1) um die tiefste Stelle (6) herum trichterförmig ausgebildet ist.

6. Vakuum-Sorptionsvorrichtung nach einem der Ansprüche 1 bis 5,
**dadurch gekennzeichnet,**
**dass** der erste Volumenbereich (1) mindestens um die tiefste Stelle (6) herum eine hydrophobe Oberfläche aufweist.

7. Vakuum-Sorptionsvorrichtung nach einem der Ansprüche 1 bis 6,
**dadurch gekennzeichnet,**
**dass** die beiden Volumenbereiche (1, 2) miteinander über eine mit einem Druckausgleichsventil (9) versehene Verbindungsleitung (10) verbunden sind.

8. Vakuum-Sorptionsvorrichtung nach Anspruch 7,
**dadurch gekennzeichnet,**
**dass** das Druckausgleichsventil (9) wahlweise über eine Ablaufsteuerung der Sorptionsvorrichtung oder einen am Sorber (3) angeordneten Temperatursensor betätigbar ausgebildet ist.

## Claims

1. A vacuum sorption device, comprising a first volume area (1), in which a sorber (3), which periodically sorbs or desorbs a refrigerant, and a condenser (4) are arranged, the condenser (4) being implemented as a shell chamber which encloses the sorber (3), and a second volume area (2) arranged below the first, in which a vaporizer (5) is arranged, a lowest point (6) of the first volume area (1) having an opening (8), which is closable using a closure element (7) and leads to the second volume area (2),
**characterized in that**
the closure element (7) is implemented as a ball, which has a greater diameter than the shape-adapted opening (8), mounted so it is freely movable in the first volume area (1).

2. The vacuum sorption device according to Claim 1, **characterized in that**
the closure element (7), which is implemented as a ball, is implemented as internally hollow.

3. The vacuum sorption device according to Claim 1 or 2, **characterized in that**
the closure element (7), which is implemented as a ball, consists of plastic, in particular polypropylene.

4. The vacuum sorption device according to one of Claims 1 to 3,
**characterized in that**
the circular opening (8) alternately is implemented as conical having an opening angle of 20° to 80°, preferably 60°, or is adapted to the ball shape on its edge area directed toward the first volume area (1).

5. The vacuum sorption device according to one of Claims 1 to 4,
**characterized int hat**
the first volume area (1) is implemented as funnel-shaped around the lowest point (6).

6. The vacuum sorption device according to one of Claims 1 to 5,
**characterized in that**
the first volume area (1) has a hydrophobic surface at least around the lowest point (6).

7. The vacuum sorption device according to one of Claims 1 to 6,
**characterized in that**
the two volume areas (1, 2) are connected to one another via a connection line (10), which is provided with a pressure compensation valve (9).

8. The vacuum sorption device according to Claim 7, **characterized in that**
the pressure compensation valve (9) is implemented so it can be alternately actuated via a drain controller of the sorption device or a temperature sensor arranged on the sorber (3).

## Revendications

1. Dispositif de sorption à vide, comprenant une première zone de volume (1), dans laquelle sont installés un dispositif de sorption (3) sorbant ou désorbant périodiquement un agent de refroidissement, ainsi qu'un condensateur (4), dans lequel le condensateur (4) est conçu comme une enveloppe entourant le dispositif de sorption (3), et une deuxième zone de volume (2) agencée en-dessous de la première, dans laquelle est installé un évaporateur (5), dans lequel l'endroit le plus profond (6) de la première zone de volume (1) comporte une ouverture (8) menant à la deuxième zone de volume (2) et susceptible d'être fermée par un élément de fermeture (7),
**caractérisé en ce que**
l'élément de fermeture (7) est conçu comme une bille disposée librement dans la première zone de volume (1), qui présente un diamètre supérieur à l'ouverture (8) adaptée quant à sa forme.

2. Dispositif de sorption à vide selon la revendication 1,
**caractérisé en ce que**
l'élément de fermeture (7) conçu comme une bille est creux à l'intérieur.

3. Dispositif de sorption à vide selon la revendication 1 ou 2,
**caractérisé en ce que**
l'élément de fermeture (7) conçu comme une bille est constitué d'une matière plastique, en particulier de polypropylène.

4. Dispositif de sorption à vide selon l'une des revendications 1 à 3,
**caractérisé en ce que**
dans sa région de bord tournée vers la première zone de volume (1), l'ouverture circulaire (8) est conçue soit en forme de cône avec un angle d'ouverture de 20° à 80°, de préférence de 60°, soit adaptée à la forme de la bille.

5. Dispositif de sorption à vide selon l'une des revendications 1 à 4,
**caractérisé en ce que**
la première zone de volume (1) est conçue en forme d'entonnoir autour de l'endroit le plus profond (6).

6. Dispositif de sorption à vide selon l'une des revendications 1 à 5,
**caractérisé en ce que**
la première zone de volume (1) présente une surface hydrophobe, au moins autour de l'endroit le plus profond (6).

7. Dispositif de sorption à vide selon l'une des revendications 1 à 6,
**caractérisé en ce que**
les deux zones de volume (1, 2) sont reliées entre elles par une conduite de liaison (10) pourvue d'une soupape d'équilibre de pression (9).

8. Dispositif de sorption à vide selon l'une des revendications 1 à 7,
**caractérisé en ce que**
la soupape d'équilibre de pression (9) est conçue de manière à pouvoir être actionnée soit par une commande de décharge du dispositif de sorption, soit par un capteur de température monté sur le dispositif de sorption (3).
